**Europäisches Patentamt**

(19) **European Patent Office**

**Office européen des brevets**

(11) Numéro de publication: **0 1 1 4 766**
**B1**

(12) **FASCICULE DE BREVET EUROPEEN**

(45) Date de publication du fascicule du brevet:
**10.12.86**

(21) Numéro de dépôt: **84400079.4**

(22) Date de dépôt: **13.01.84**

(51) Int. Cl.⁴: **B 26 D 1/29,** A 47 J 43/25,
A 47 J 43/06

(54) **Appareil électroménager pour préparer des aliments.**

(30) Priorité: **24.01.83 LU 84597**

(43) Date de publication de la demande:
**01.08.84 Bulletin 84/31**

(45) Mention de la délivrance du brevet:
**10.12.86 Bulletin 86/50**

(84) Etats contractants désignés:
**BE DE FR GB**

(56) Documents cités:
**US - A - 1 676 241**
**US - A - 2 496 780**
**US - A - 3 559 896**

(73) Titulaire: **SEB S.A., F-21260 Selongey (FR)**

(72) Inventeur: **Daloz, Joany, 21 Parc du Petit Bois,**
**F-21120 Is-Sur-Tille (FR)**

(74) Mandataire: **Bouju, André, Cabinet Bouju 38 avenue de**
**la Grande Armée, F-75017 Paris (FR)**

ACTORUM AG

## Description

La présente invention a pour objet un appareil électroménager destiné à la préparation des aliments par râpage, éminçage, hachage, etc., et couramment appelé «robot» ménager.

Les appareils que l'on trouve actuellement dans le commerce sont constitués d'une cuve amovible, immobilisée en rotation, dont le fond est traversé par un axe rotatif pouvant supporter soit un disque de râpage ou d'éminçage, soit un jeu de couteaux. Un couvercle muni d'une cheminée d'introduction des légumes protège l'utilisateur contre les risques de coupure des doigts par les couteaux. Le jeu de couteaux est situé près du fond de la cuve. Par contre, les disques de râpage ou d'éminçage sont placés immédiatement sous le couvercle, au ras de l'orifice inférieur de la cheminée. Le moteur d'entraînement est indifféremment situé sous la cuve ou sur le côté de l'appareil. Des appareils de ce genre sont décrits notamment dans les brevets FR 2 147 361 et US 4 113 188.

Ces appareils présentent divers inconvénients inhérents aux risques de coupure en fonctionnement et durant le temps d'arrêt. Pour éviter de tels accidents, il est nécessaire de les équiper d'un couvercle et de moyens de sécurité, ce qui rend difficile l'accès à la cuve. Par ailleurs, la disposition relative du moteur ou du socle empêche de disposer un réceptacle sous la zone de travail.

Le brevet US-A-2 496 780, considéré comme plus pertinent de l'art antérieur, décrit un appareil électroménager destiné à la préparation mécanique d'aliments tels que des légumes comprenant une cuve cylindrique rotative dans laquelle est fixé un outil circulaire comportant des organes tranchants et solidaire en rotation de la cuve et un moteur d'entraînement entraînant la cuve par engrènement périphérique, celle-ci ne comportant pas d'axe de tourillonnement. On comprend aisément le danger pour l'utilisateur que représentent les organes de coupe rotatifs décrits par ce brevet.

Le but de l'invention est de remédier à ces divers inconvénients en réalisant un appareil de type «robot» dont la cuve est d'accès facile et dont les couteaux ne présentent quasiment aucun risque de coupure pour l'utilisateur.

Suivant l'invention, l'appareil électroménager destiné à la préparation mécanique d'aliments, comprenant une cuve cylindrique rotative dans laquelle est monté de façon interchangeable au moins un organe tranchant adapté notamment pour hacher, couper, émincer, râper ou mélanger les aliments, et un moteur d'entraînement disposé à proximité immédiate de la zone de traitement des aliments, est caractérisé en ce que la cuve comporte un fond amovible et des moyens d'entraînement des aliments solidaires de la paroi intérieure ou du fond de la cuve et faisant saillie vers l'intérieur de cette cuve et en ce que l'organe tranchant est lié au fond amovible, de façon à constituer avec celui-ci une unité amovible, des moyens étant prévus pour tenir immobilisé cet organe tranchant lors de l'utilisation de l'appareil.

Etant donné que l'organe tranchant est immobilisé, l'utilisateur ne risque pas d'être blessé lors du fonctionnement de l'appareil.

Selon une première version de l'appareil selon l'invention, appliqué à l'éminçage des légumes, les moyens d'entraînement des aliments comprennent une pale fixée à la paroi cylindrique de la cuve et légèrement inclinée par rapport à la génératrice droite du cylindre constituant la paroi tubulaire de la cuve, cette inclinaison étant en retard par rapport au sens de la rotation, le ou les organes tranchants étant fixé au fond amovible et étant chacun constitués par un couteau s'étendant selon un plan général sensiblement horizontal, du centre à la périphérie de la cuve, ledit couteau étant disposé à une certaine distance du fond dudit cylindre et au droit d'un orifice pratiqué dans ledit fond, selon des dispositions déjà connues dans les appareils à disques rotatifs d'éminçages.

Dans cette version de l'appareil, lorsqu'on fait tourner à faible vitesse la paroi cylindrique de la cuve après avoir disposé par exemple des carottes contre la pale, ces carottes se trouveront être râpées ou coupées en tranches à chaque fois qu'elles passeront sur les organes de râpage ou les couteaux émin-ceurs. La vitesse de rotation doit être suffisante pour maintenir les légumes plaqués d'une part contre la paroi cylindrique et d'autre part contre la pale, en leur permettant toutefois de descendre par leur propre poids. L'inclinaison de la pale améliore la descente des légumes vers l'organe tranchant.

Dans une deuxième version de l'appareil, appliqué au hachage de la viande, les moyens d'entraînement comprennent des rampes disposées radialement sur le fond de la cuve, le ou les organes tranchants étant constituées par au moins un couteau à tranchant courbe, s'étendant selon un plan général horizontal et dont l'arête tranchante vient effleurer la paroi verticale de la cuve, le ou lesdits couteaux étant disposés à proximité immédiate du sommet des rampes.

Si l'on place de la viande dans la cuve et que celle-ci est en rotation, la viande se plaque contre la paroi cylindrique de la cuve. Une certaine quantité de viande est entraînée par les rampes vers le couteau où elle est coupée entre le tranchant de celui-ci et le bord de la cuve.

D'autres particularités et avantages de l'invention apparaîtront encore dans la description ci-après.

Aux dessins annexés, donnés à titre d'exemple non limitatifs:

la figure 1 est une vue en coupe suivant le plan I-I de la figure 2 de l'appareil dans sa cuve à paroi cylindrique rotative;

la figure 2 est une vue en coupe longitudinale de l'appareil muni de sa cuve à paroi cylindrique rotative;

la figure 3 est une vue de dessus de l'appareil équipé pour l'éminçage des légumes;

la figure 4 est une vue en coupe longitudinale de l'appareil équipé pour l'éminçage des légumes (le couteau, la pale et le volet ont été ramenés dans le plan de coupe dans un but de clarté);

la figure 5 est une vue en coupe suivant le plan V-V de la figure 6 de l'appareil équipé pour le hachage de la viande;

la figure 6 est une vue en coupe longitudinale de l'appareil équipé pour le hachage de la viande.

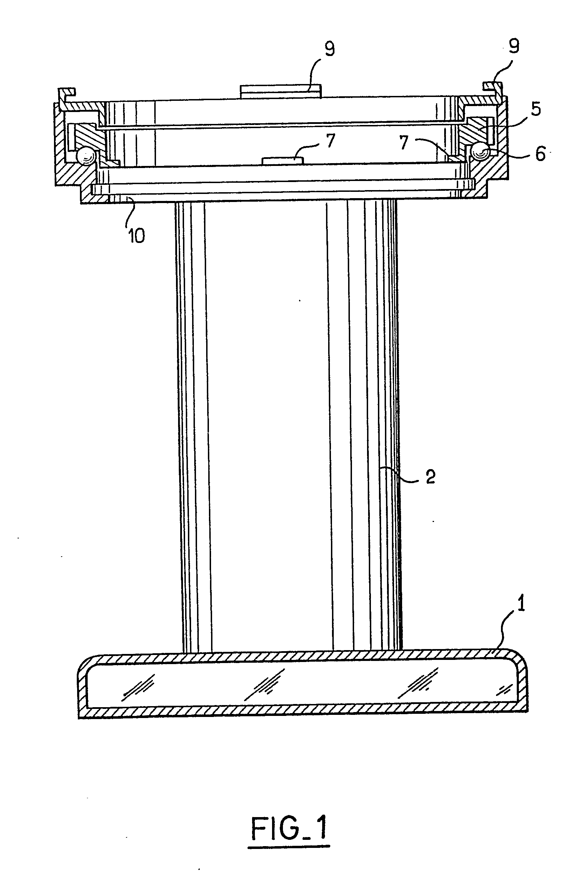

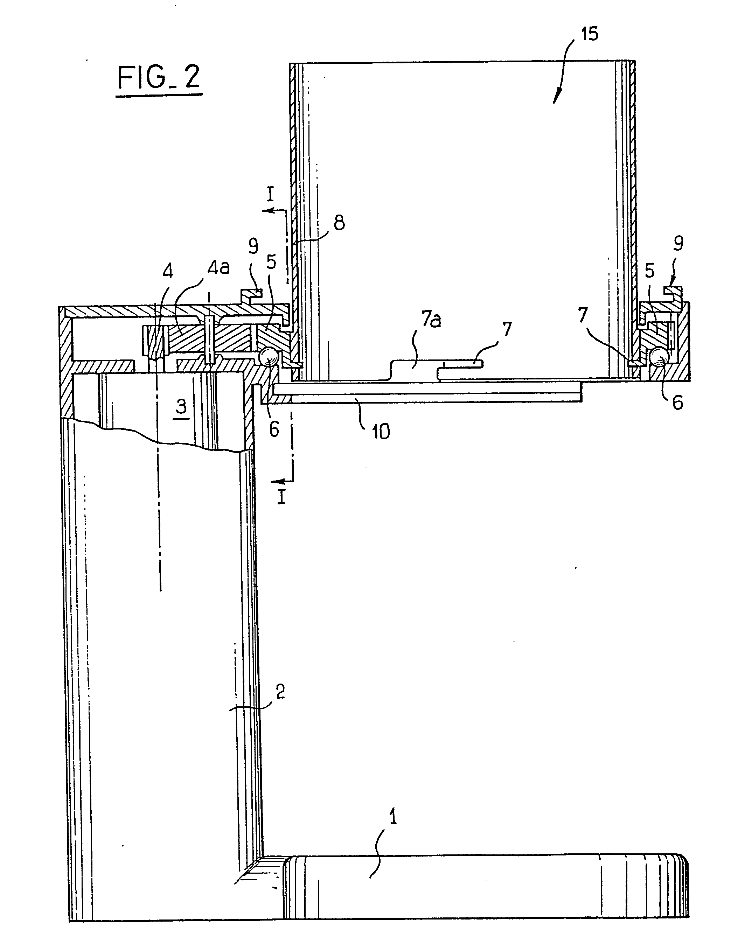

Dans la réalisation représentée sur les figures annexées, l'appareil électroménager conforme à l'invention comprend un socle 1 surmonté par une colonne 2 qui renferme un moteur 3. L'arbre de sortie de ce moteur porte un pignon d'attaque 4 engrénant une roue dentée intermédiaire 4a (voir figure 2) située dans un plan parallèle au socle 1. Cette roue dentée 4a entrène une couronne dentée 5 faisant saillie hors de la colonne 2 et s'étendant au-dessus du socle 1. Cette couronne dentée 5 repose sur un chemin re roulement à billes 6 (figures 1, 2, 4 et 6).

Dans l'évidement central de la couronne dentée 5 est fixée de façon amovible, la partie inférieure d'une cuve rotative 15 à paroi latérale cylindrique 8. Cette fixation est assurée au moyen d'ergots 7 solidaires de la couronne dentée 5 s'engageant dans des lumières 7a en forme de baïonnette ménagées à la base de la paroi latérale 8 de la cuve.

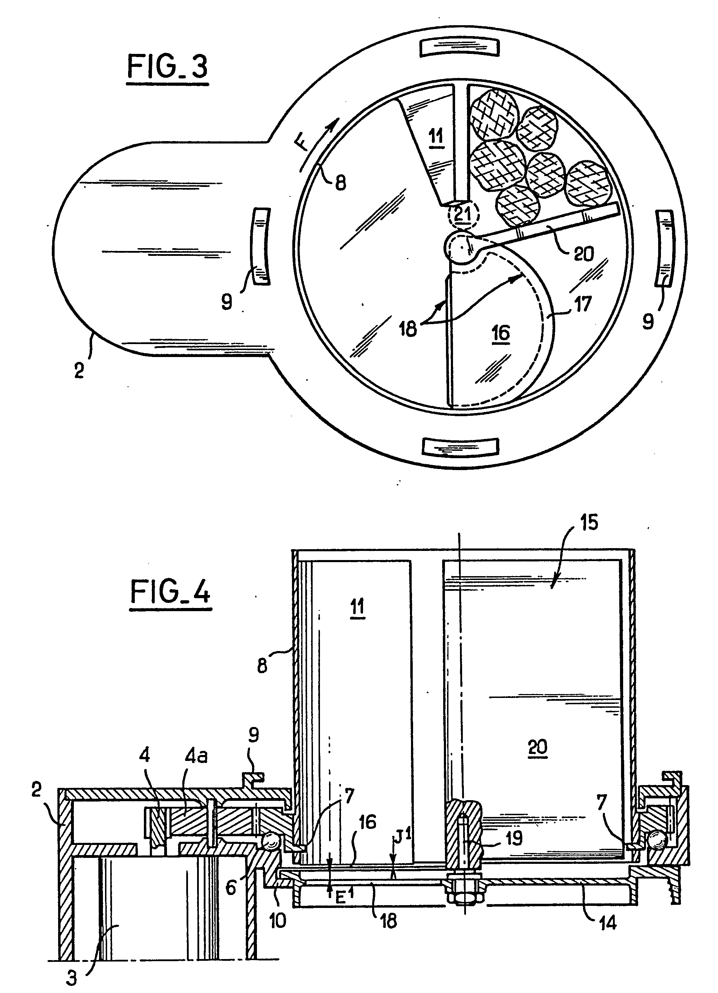

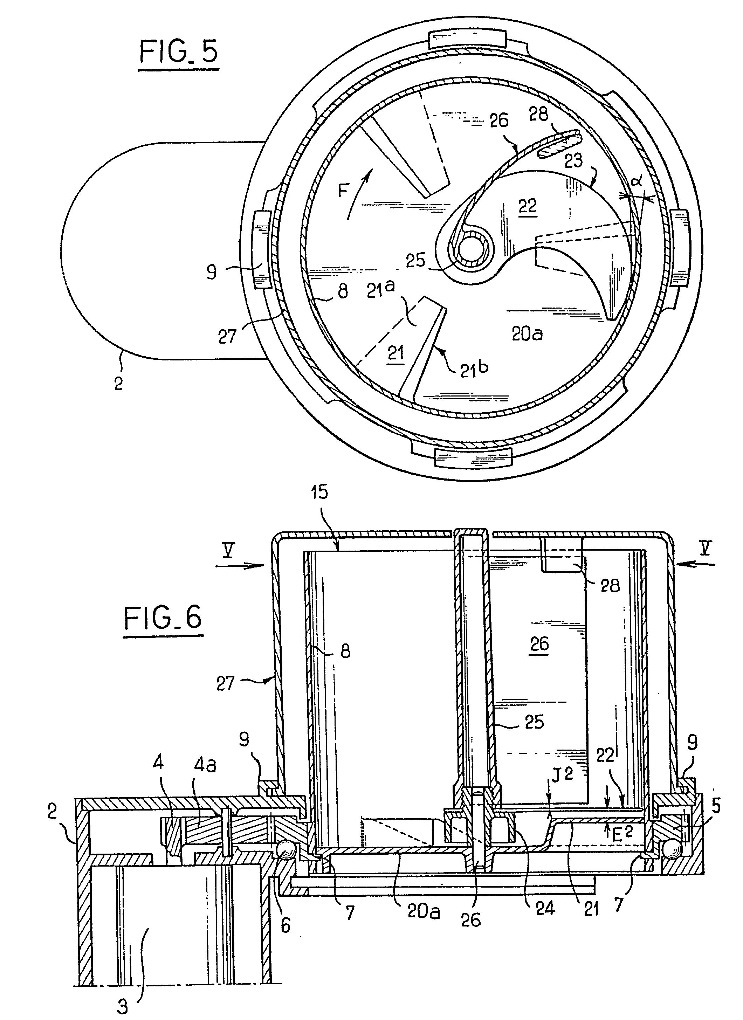

Dans toutes les réalisations représentées sur les figures annexés, l'appareil électroménager destiné à la préparation mécanique d'aliments, comporte une cuve 15 verticale rotative dont la paroi latérale tubulaire et cylindrique 8 est rotative, cette cuve comportant un fond amovible 14, 20a (voir figures 4 et 6), des moyens d'entraînement 11, 21, des aliments attenants à la paroi latérale 8 ou au fond de la cuve et faisant saillie vers l'intérieur de celle-ci, et au moins un organe tranchant 16, 22, immobile par rapport à l'appareil lorsque celui-ci est utilisé.

Comme indiqué sur les figures 3 et 4, concernant un appareil équipé pour émincer les légumes, le moyen d'entraînement des légumes est constitué par une pale 11 fixée à la paroi cylindrique 8 de la cuve 15. Cette pale 11 est inclinée par rapport à la génératrice droite du cylindre constituant la paroi tubulaire 8 de la cuve 15, cette inclinaison étant en retard par rapport au sens F de la rotation.

L'organe tranchant est constitué par un couteau 16 ayant un tranchant 17 s'étendant selon un plan général sensiblement horizontal, du centre à la périphérie de la cuve 15. Ce couteau est disposé à une faible distance du fond 14 du cylindre 8 et au droit d'un orifice 18 pratiqué dans ledit fond, selon des dispositions déjà connues dans les appareils à disques rotatifs d'éminçage.

Le ou les organes tranchants peuvent également être constitués par des crevés agencés selon des spirales parallèles et disposés dans le fond de la cuve, selon des dispositions déjà connues dans les appareils à disques rotatifs de râpage.

Le fond 14 de la cuve 15 est monté coulissant dans une glissière 10 (voir figure 4).

Sur les figures 3 et 4, on voit d'autre part qu'un volet 20 s'étend du centre à la périphérie de la cuve 15 sur sensiblement la même hauteur que la pale 11 fixée à la paroi 8 de ladite cuve et incliné selon un angle sensiblement identique. Le volet 20 est monté à tourillonnement libre sur un pivot central 19 solidaire du fond 14, selon un axe identique ou des axes voisins de celui de la cuve 15. Par ailleurs, ce volet 20 est entraîné en rotation par les aliments accumulés devant la pale 11 ou par la pale elle-même.

Le fonctionnement de cet appareil est le suivant:

On place les légumes, par exemple des pommes de terre, en vrac dans la cuve 15. S'il s'agit de légumes de forme allongée, par exemple carottes ou concombres, il est nécessaire de les placer debout, devant la pale 11. Le volet 20 est ensuite rabattu contre les légumes pour les maintenir en place. Le moteur 3 est mis en route. La rotation a lieu dans le sens de la flèche F. La vitesse de rotation est relativement lente (de l'ordre de 120 tours/minute pour un diamètre de cuve égal à 155 mm). La force centrifuge plaque les légumes contre la paroi cylindrique 8 tandis que l'inertie des légumes les applique contre la pale 11. Pour pouvoir augmenter la vitesse de rotation de la cuve, sans risque de voir les légumes ne plus descendre par leur propre poids, il est indispensable d'incliner la pale. Cette inclinaison qui consiste à reculer le bas de la pale 11 par rapport au sens de rotation, décompose la force d'inertie en une composante verticale de haut en bas.

L'inertie du volet 20 maintient les légumes debout. A chaque tour de la cuve 15, les légumes sont présentés devant la lame du couteau fixe 16, et une tranche d'épaisseur $E_1$ est coupée. Le jeu $J_1$ compris entre le dessus du couteau 16 et le bas de la pale 11 détermine l'épaisseur du dernier morceau de légume.

Si l'on place un fond muni de crevés selon la technique utilisée pour le râpage des légumes, le volet 20 est inutile, car dans ce cas les légumes peuvent se coucher sans inconvénient.

Il est à noter que la totalité de la cuve 15 peut être remplie de légumes, ce qui confère une très grande capacité à l'appareil, malgré la vitesse de rotation relativement lente.

Dans la réalisation des figures 5 et 6, concernant un appareil pour hacher la viande, les moyens d'entraînement de la viande sont constitués par des rampes 21 disposées radialement sur le fond 20a de la cuve. Ce fond 20a de la cuve est amovible mais est solidaire en rotation de la paroi cylindrique 8 constituant ladite cuve. Ce fond 20a repose sur l'extrémité des ergots 7 et est entraîné en rotation par celles-ci.

Les rampes 21 présentent un plan incliné 21a faisant face au sens de la rotation F de la cuve. La face arrière 21b de ces rampes est verticale.

L'organe tranchant est constitué par un couteau 22 à tranchant courbe 23, s'étendant selon un plan général horizontal et dont l'arêt tranchante 23 vient effleurer la paroi verticale 8 de la cuve. Le couteau 22 est disposé à proximité immédiate du sommet des rampes 21. Ce couteau 22 est fixé à un moyeu central 24 tourillonnant librement sur le fond 20a de la cuve. Ce moyeu 24 est prolongé par un arbre 25 auquel est attenant un déflecteur 26.

L'angle α formé par le tranchant 23 du couteau 22 et la paroi verticale du cylindre 8, en leur point de tangence, est réglable. Le réglage de l'angle α est obtenu par déplacement du point de tourillonnement ou du moyeu central 24 de fixation du couteau 22.

Par ailleurs (voir figure 5), le déflecteur 26 est disposé devant le tranchant 23 du couteau 22 et est solidaire en rotation avec celui-ci. De plus, l'immobilisation du couteau 22 est obtenue grâce à une butée fixe 28 qui est dépendante du couvercle 27 de l'appareil, qui est fixé par engagement sous les ergots 9.

Par ailleurs, sur la figure 6, $E^2$ désigne le jeu entre sommet des rampes 21 et couteau 22 et $J^2$, le jeu

entre couteau 22 et partie inférieure du déflecteur 26.

L'appareil étant équipé de son fond 20a et de son ensemble couteau-déflecteur 22-26, on remarque:

1. que cet ensemble couteau-déflecteur est libre en rotation;

2. que lorsque la cuve est mise en rotation, le couteau reste fou. Si l'on met à ce moment de la viande dans la cuve, cette viande se plaque contre la paroi-cylindrique 8, et vient en butée contre les flancs 21a des rampes 21, entraînant en rotation le déflecteur 26 et le couteau 22. Il n'y a encore aucun effet de hachage. Par contre, si l'on immobilise le déflecteur 26 — manuellement ou en plaçant le couvercle 27 sur l'appareil — la viande s'accumule devant le déflecteur 26 et celle qui est située près du fond 20a est déplacée dans le sens F de la rotation en même temps que, par inertie, elle est soulevée par les rampes 21. Elle est alors tranchée par le couteau 22 au moment où la rampe 21 passe sous celui-ci. Le tranchage s'effectue par glissement le long du tranchant 23 puis cisaillage entre l'extrémité du couteau et la paroi cylindrique 8. On remarque à ce sujet que l'angle α intervient dans la qualité du tranchage. La rampe 21 suivante amène d'autres viandes qui sont tranchées de la même manière.

Le fait d'enlever le couvercle arrête l'opération de hachage puisque le couteau 22 entre alors en rotation à la même vitesse que le fond 20a.

Durant le hachage, la vitesse de rotation de la paroi 8 est de 400 tours/minute pour un diamètre de 155 mm.

Dans l'une ou l'autre des utilisations de l'appareil électroménager qui vient d'être décrit, on remarque qu'il est pratiquement impossible de faire pénétrer la main dans la cuve durant la rotation de celle-ci. En effet, en éminçage, la pale 11 et le volet 20, animés d'un mouvement de rotation, rejettent la main à l'extérieur. Lorsqu'il y a des légumes entre la pale et le volet, le phénomène est le même. Dans l'utilisation en râpe, bien que le volet 20 ne soit pas nécessaire, la difficulté est aussi grande.

L'utilisation en hâchage est extrêmement dangereuse avec les «robots» ménagers à lames rotatives lorsque l'on neutralise les systèmes de sécurité. Grâce à l'appareil conforme à l'invention, lorsque l'on met en marche sans couvercle, le couteau tourne librement et ne présente donc aucun danger. Toujours sans couvercle mais avec de la viande dans la cuve, la rotation rapide du déflecteur 26 rejette la main à l'extérieur.

Bien entendu l'invention n'est pas limitée aux exemples de réalisation que l'on vient de décrire et on peut apporter à ceux-ci de nombreuses modifications sans sortir du cadre de la présente invention tel que défini à la revendication 1 ci-après.

## Revendications

1. Appareil électroménager destiné à la préparation mécanique d'aliments, comprenant une cuve cylindrique rotative (15) dans laquelle est monté de façon interchangeable au moins un organe tranchant (16, 22) adapté notamment pour hacher, couper, émincer, râper ou mélanger les aliments, et un moteur d'entraînement (3) disposé à proximité immédiate de la zone de traitement des aliments, caractérisé en ce que la cuve (15) comporte un fond amovible (14, 20a) et des moyens d'entraînement (11, 21) des aliments solidaires de la paroi intérieure (8) ou du fond (20a) de la cuve (15) et faisant saillie vers l'intérieur de cette cuve et en ce que l'organe tranchant (16, 22) est lié au fond amovible (14, 20a) de façon à constituer avec celui-ci une unité amovible, des moyens (28) étant prévus pour tenir immobilisé cet organe tranchant lors de l'utilisation de l'appareil.

2. Appareil selon la revendication 1, caractérisé en ce que les moyens d'entraînement comprennent une pale (11) fixée à la paroi cylindrique (8) de la cuve.

3. Appareil selon la revendication 2, caractérisé en ce que la pale (11) est inclinée par rapport à la génératrice droite du cylindre constituant la paroi tubulaire (8) de la cuve, cette inclinaison étant en retard par rapport au sens de rotation (F) de la paroi (8).

4. Appareil selon l'une des revendications 1 à 3, caractérisé en ce que le ou les organes tranchants sont fixés au fond amovible (14) et sont chacun constitués par un couteau (16) s'étendant selon un plan général sensiblement horizontal, du centre à la périphérie de la cuve, ledit couteau étant disposé à une faible distance (E1) du fond (14) de la cuve et au droit d'un orifice (18) pratiqué dans ledit fond.

5. Appareil selon l'une des revendications 1 à 3, caractérisé en ce que le ou les organes tranchants sont constitués par des crevés agencés selon des spirales parallèles et disposés dans le fond de la cuve.

6. Appareil selon l'une des revendications 4 ou 5, caractérisé en ce que le fond (14) de la cuve (15) est immobile.

7. Appareil selon la revendication 6, caractérisé en ce que le fond (14) de la cuve est coulissant.

8. Appareil selon l'une des revendications 1 à 7, caractérisé en ce qu'un volet (20) s'étend du centre à la périphérie de la cuve sur sensiblemement la même hauteur que la pale (11) fixée à la paroi (8) de ladite cuve et incliné selon un angle sensiblement identique, que ledit volet (20) est monté à trourillonnement libre selon un axe identique ou des axes voisins de celui de la cuve, ledit volet étant entraîné en rotation par les aliments accumulés devant la pale (11) ou par la pale elle-même.

9. Appareil selon la revendication 1, caractérisé en ce que les moyens d'entraînement comprennent des rampes (21) disposées radialement sur le fond (20a) de la cuve.

10. Appareil selon la revendication 9, caractérisé en ce que le fond (20a) de la cuve est amovible mais solidaire en rotation de la paroi cylindrique (8) constituant ladite cuve.

11. Appareil selon l'une des revendications 1 à 10, caractérisé en ce que le ou les organes tranchants sont constitués par au moins un couteau (22) à tranchant courbe (23), s'étendant selon un plan général sensiblement horizontal et dont l'arête tranchante (23) vient effleurer la paroi verticale (8) de la cuve, le ou lesdits couteaux étant disposés à proximité immédiate du sommet des rampes (21).

12. Appareil selon la revendication 11, caractérisé en ce que l'angle (α) formé par le tranchant (23) du couteau (22) et la paroi verticale (8) de la cuve, en leur point de tangence, est réglable.

13. Appareil selon la revendication 12, caractérisé en ce que le réglage de l'angle (α) est obtenu par déplacement du point de tourillonnement du moyeu (24) de fixation du couteau (22).

14. Appareil selon la revendication 11, caractérisé en ce qu'un déflecteur (26) est disposé devant le tranchant (23) du couteau (22) et est solidaire en rotation avec celui-ci.

15. Appareil selon l'une des revendications 11 à 14, caractérisé en ce que les moyens pour immobiliser le couteau (22) comprennent une butée fixe (28).

16. Appareil selon la revendication 15, caractérisé en ce que la butée fixe (28) est dépendante du couvercle (27) de l'appareil.

## Patentansprüche

1. Haushaltsgerät, welches zur mechanischen Zubereitung von Nahrungsmitteln bestimmt ist, versehen mit einer zylindrischen drehbaren Schüssel (15), in welcher wenigstens ein Schneidorgan (16, 22) auswechselbar gelagert ist, welches insbesondere zum Hacken, Schneiden, Zerschneiden in dünne Scheiben, Raspeln oder Mischen der Nahrungsmittel ausgebildet ist, und mit einem Antriebsmotor (3), welcher in unmittelbarer Nähe der Verarbeitungszone der Nahrungsmittel angeordnet ist, dadurch gekennzeichnet, dass die Schüssel (15) einen entfernbaren Boden (14, 20a) und Mitnahmemittel (11, 21) für die Nahrungsmittel umfasst, welche fest mit der unteren Wand (8) oder dem Boden (20a) der Schüssel (15) verbunden sind und in den Innenraum dieser Schüssel hineinstehen, und dass das Schneidorgan (16, 22) an den entfernbaren Boden (14, 20a) derart angeschlossen ist, dass es mit diesem eine entfernbare Einheit bildet, wobei Mittel (28) vorgesehen sind, um dieses Schneidorgan während der Verwendung in dem Gerät unbewegt zu halten.

2. Gerät nach Anspruch 1, dadurch gekennzeichnet, dass die Mitnahmemittel einen Flügel (11) umfassen, welcher an der zylindrischen Wand (8) der Schüssel befestigt ist.

3. Gerät nach Anspruch 2, dadurch gekennzeichnet, dass der Flügel (11) gegenüber der geraden Mantellinie des Zylinders geneigt ist, welcher die rohrförmige Wand (8) der Schüssel bildet, wobei diese Neigung gegenüber dem Drehsinn (F) der Wand (8) nacheilt.

4. Gerät nach einem der Ansprüche 1 bis 3, dadurch gekennzeichnet, dass das Schneidorgan bzw. die Schneidorgane jeweils am entfernbaren Boden (14) befestigt und jeweils durch ein Messer (16) gebildet sind, welches sich in einer im wesentlichen horizontalen allgemeinen Ebene von der Mitte bis zum Umfang der Schüssel erstreckt, wobei dieses Messer in einem geringen Abstand (E1) vom Boden (14) der Schüssel und in der Senkrechten einer Öffnung (18) angeordnet ist, welche in dem genannten Boden angebracht ist.

5. Gerät nach einem der Ansprüche 1 bis 3, dadurch gekennzeichnet, dass das Schneidorgan bzw. die Schneidorgane durch Einschnitte gebildet sind, welche entlang parallelen Spiralen und im Boden der Schüssel angeordnet sind.

6. Gerät nach Anspruch 4 oder 5, dadurch gekennzeichnet, dass der Boden (14) der Schüssel (15) unbeweglich ist.

7. Gerät nach Anspruch 6, dadurch gekennzeichnet, dass der Boden (14) der Schüssel gleitbeweglich ist.

8. Gerät nach einem der Ansprüche 1 bis 7, dadurch gekennzeichnet, dass eine Schaufel (20) sich von der Mitte zum Umfang der Schüssel im wesentlichen über dieselbe Höhe wie der an der Wand (8) dieser Schüssel befestigte Flügel (11) erstreckt und unter einem im wesentlichen gleichen Winkel geneigt ist, wobei diese Schaufel (20) frei um eine Achse drehbar ist, die mit der Achse der Schüssel übereinstimmt oder dieser benachbart ist, wobei die Schaufel durch die vor dem Flügel (11) angesammelten Nahrungsmittel oder durch den Flügel selbst in Drehung versetzt wird.

9. Gerät nach Anspruch 1, dadurch gekennzeichnet, dass die Mitnahmemittel Rampen (21) umfassen, welche radial am Boden (20a) der Schüssel angeordnet sind.

10. Gerät nach Anspruch 9, dadurch gekennzeichnet, dass der Boden (20a) der Schüssel entfernbar, jedoch drehfest mit der zylindrischen Wand (8), welche die genannte Schüssel bildet, verbunden ist.

11. Gerät nach einem der Ansprüche 1 bis 10, dadurch gekennzeichnet, dass das Schneidorgan oder die Schneidorgane durch wenigstens ein Messer (22) mit gekrümmter Schneide (23) gebildet ist, welches sich in einer im wesentlichen horizontalen allgemeinen Ebene erstreckt und wovon die Schneidkante (23) über die vertikale Wand (8) der Schüssel streift, wobei das bzw. die Messer in unmittelbarer Nähe des Scheitels der Rampen (21) angeordnet sind.

12. Gerät nach Anspruch 11, dadurch gekennzeichnet, dass der Winkel (α), welchen die Schneide (23) des Messers (22) und die senkrechte Wand (8) der Schüssel an ihrem Berührungspunkt bilden, einstellbar ist.

13. Gerät nach Anspruch 12, dadurch gekennzeichnet, dass die Einstellung des Winkels (α) erhalten wird, indem der Drehlagerpunkt der Befestigungsnabe (24) des Messers (22) verschoben wird.

14. Gerät nach Anspruch 11, dadurch gekennzeichnet, dass ein Ablenkelement (26) vor der Schneide (23) des Messers (22) angeordnet und drehfest mit diesem verbunden ist.

15. Gerät nach einem der Ansprüche 11 bis 14, dadurch gekennzeichnet, dass die Mittel zur Festsetzung des Messers (22) einen festen Anschlag (28) umfassen.

16. Gerät nach Anspruch 15, dadurch gekennzeichnet, dass der feste Anschlag (28) vom Deckel (27) des Gerätes herabhängt.

## Claims

1. Electric household appliance for the mechanical preparation of foods, comprising a rotary cylindrical vessel (15) within which is interchangeably mounted at least one cutting member (16, 22) adapted in particular for chopping, cutting, shredding, grating or mixing foods, and a driving motor (3) placed in the immediate proximity of the food-processing zone, characterized in that the vessel (15) has a detachable bottom wall (14, 20a) and food-impelling means (11, 21) rigidly fixed to the internal wall (8) or bottom wall (20a) of the vessel (15) and projecting towards the interior of this vessel and that the cutting member (16, 22) is joined to the detachable bottom wall (14, 20a) so as to constitute a detachable unit with this latter, means (28) being provided for maintaining this cutting member in a stationary position at the time of utilization of the appliance.

2. Appliance in accordance with claim 1, characterized in that the impelling means comprise a vane (11) secured to the cylindrical wall (8) of the vessel.

3. Appliance in accordance with claim 2, characterized in that the vane (11) is inclined with respect to the straight generator-line of the cylinder which constitutes the tubular wall (8) of the vessel, this inclination being in the backward direction with respect to the direction of rotation (F) of the wall (8).

4. Appliance in accordance with one of claims 1 to 3, characterized in that the cutting members are secured to the detachable bottom wall (14) and are each constituted by a knife-blade (16) which extends in a substantially horizontal general plane from the centre to the periphery of the vessel, said knife-blade being placed at a short distance (E1) from the bottom wall (14) of the vessel and opposite to an orifice (18) formed in said bottom wall.

5. Appliance in accordance with one of claims 1 to 3, characterized in that the cutting member or members are constituted by punched-out slits arranged in parallel spirals and located in the bottom wall of the vessel.

6. Appliance in accordance with one of claims 4 or 5, characterized in that the bottom wall (14) of the vessel (15) is stationary.

7. Appliance in accordance with claim 6, characterized in that the bottom wall (14) of the vessel is designed for sliding motion.

8. Appliance in accordance with one of claims 1 to 7, characterized in that a shutter (20) extends from the center to the periphery of the vessel up to substantially the same height as the vane (11) secured to the wall (8) of said vessel and is inclined at a substantially identical angle, that said shutter (20) is mounted for free pivotal displacement about an identical axis or identical axes which are adjacent to the axis of the vessel, said shutter being driven in rotation by the foods collected in front of the vane (11) or by the vane itself.

9. Appliance in accordance with claim 1, characterized in that the impelling means comprise ramps (21) disposed radially on the bottom wall (20a) of the vessel.

10. Appliance in accordance with claim 9, characterized in that the bottom wall (20a) of the vessel is detachable but rotationally coupled with the cylindrical wall (8) constituting said vessel.

11. Appliance in accordance with one of claims 1 to 10, characterized in that the cutting member or members are constituted by at least one knife-blade (22) which is provided with a curved edge (23), which extends in a substantially horizontal general plane and the cutting edge (23) of which is located in very close proximity to the vertical wall (8) of the vessel, the knife-blade or knife-blades being placed in immediate proximity to the apices of the ramps (21).

12. Appliance in accordance with claim 11, characterized in that the angle ($\alpha$) formed by the cutting edge (23) of the knife-blade (22) and the vertical wall (8) of the vessel at their tangential point is adjustable.

13. Appliance in accordance with claim 12, characterized in that adjustment of the angle ($\alpha$) is obtained by displacement of the point of pivotal displacement of the hub (24) on which the knife-blade (22) is fixed.

14. Appliance in accordance with claim 11, characterized in that a deflector (26) is placed in front of the cutting edge (23) of the knife-blade (22) and is rotationally coupled with this latter.

15. Appliance in accordance with one of claims 11 to 14, characterized in that the means for maintaining the knife-blade (22) in a stationary position comprise a fixed stop (28).

16. Appliance in accordance with claim 15, characterized in that the fixed stop (28) is dependent on the cover (27) of the appliance.

FIG_1

FIG_2

FIG_3

F

8

11

21

20

9

18

17

16

9

2

FIG_4

15

11

20

8

9

4    4a

2

7

16

J¹

19

7

6

14

3    10    E¹    18

FIG. 5

FIG. 6